# EUROPEAN PATENT APPLICATION

(11) **EP 1 513 238 A1**
(43) Date of publication of application: **09.03.2005**
(21) Application number: 04019374.0
(22) Date of filing: 16.08.2004
(51) Int. Cl.: H02G 3/12

(54) **A bracket for mounting receptacles housing components of an electric system into building walls**

(30) Priority: 03.09.2003 IT TN20030013
(71) Applicant: Monfredini Fausto & C.s.n.c., 38079 Tione di Trento (TN) (IT)
(72) Inventor: Monfredini, Roberto, 38079 Tione di Trento (TN) (IT)
(74) Representative: Monti, Umberto

(57) **Abstract**

A bracket assembly for mounting enclosures (4) for housing equipments of wiring installations into a building wall comprising a base member (1) adapted to be fixed to the floor, a stud member (2) connected to said base member (1), and at least one member (3) adapted to engage at least one of the said enclosures (4) that can be fitted to said stud member (2) at predetermined positions.

## Description

The present invention generally relates to the mounting into a wall of receptacles or enclosures for housing equipments used in fixed electric installations, and more particularly the invention relates to a bracket assembly for mounting into a wall enclosures such as flush mounting boxes, junction boxes, the so called "portafrutti" boxes, etc.

With the term building wall it is meant in general a wall made of masonry, either prefabricated or not, of plasterboard or any other material currently used in building residential and industrial constructions.

Although in the following the invention will be disclosed with particular reference to the laying of installations for delivering electric power in residential or industrial buildings, the invention is generally applicable to any other installation comprising flexible electrical conductors or wiring, either contained within protecting flexible pipes or not, and therefore it can be used in telephone installations, digital and/or analogical telecommunication networks, sound equipments, intercoms, and the like.

Traditionally, flush mounting boxes (also called outlet boxes) as well as other enclosures for containing components of an electric installation in a building wall, are to be properly fitted into recesses formed in the walls under construction and bonded thereto with cement or plaster. This mounting method requires a pretty good craftsmanship, is rather time consuming and often leads to wrong or inaccurate positionings of the enclosures.

There have been suggested mounting assemblies in which the position of an outlet box is slightly adjustable, nevertheless these known devices do not allow to mount the box or enclosure at a predetermined position in a wall under construction, i.e. at selected height, depth and side location (referred for example to the incoming conductors).

It is an object of the present invention to overcome the drawbacks and the limitations of the prior art devices, and particularly to allow the precise mounting of the enclosures at predetermined positions, in a simple and quick way, also by unskilled personnel.

The above objects are achieved through a bracket assembly as claimed in claim 1. Further advantageous characteristics are recited by the dependent claims.
The arrangement of the invention allows to achieve several advantages, and more precisely:
- an easy assembling also by inexperienced or unskilled workers;
- a better precision and a quicker assembling of the enclosures in respect of those of the conventional methods;
- a reduction of the installation costs;
- an adaptable and flexible positioning of the enclosures.

The bracket according to the invention finds a particularly advantageous application in laying electrical installations of hotel, apartment houses, and the like, in which the execution times are to be short and the box sizes do not vary appreciably.

The invention will now be described with reference to the attached drawings illustrating preferred but non limiting embodiments thereof, in which:
Figs. 1 to 3 are schematic perspective views illustrating an actually preferred embodiment of a bracket according to the invention, and more particularly Fig. 1 shows a base member, Fig. 2 a stud member and Fig. 3 a member adapted to engage the enclosures;
Fig. 4 is a perspective view illustrating a bracket assembly together with some enclosures.

Throughout all the Figures, equal or substantially equivalent components have been indicated by the same references.

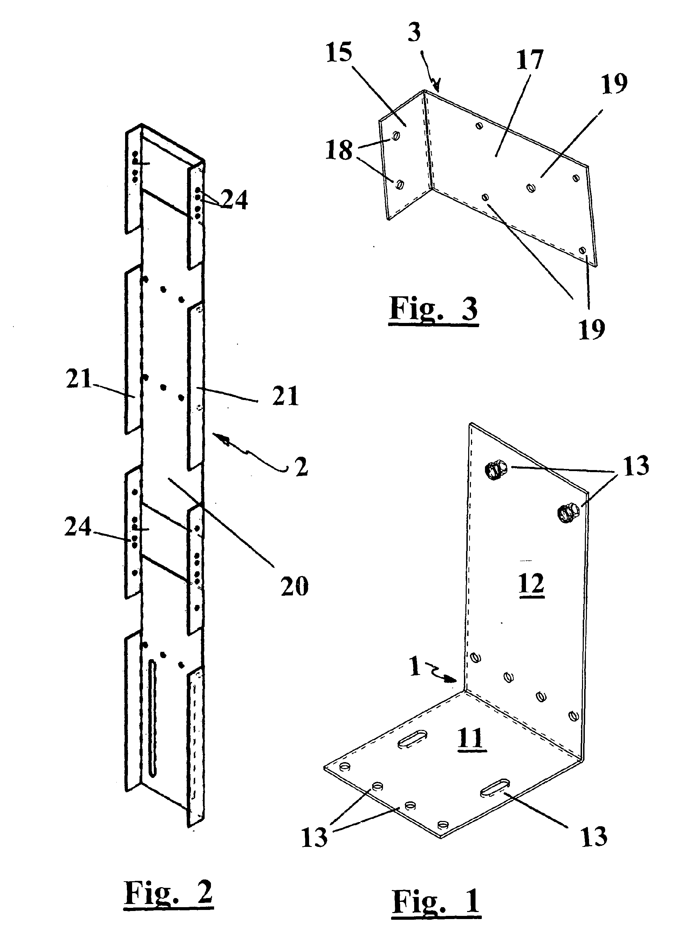

With reference to Fig.s 1 to 3, a bracket assembly according to the invention comprises an base member 1 adapted to be secured to the floor, shown in Fig. 1, an stud member 2, shown in Fig. 2, to be connected to the base member, and at least one member 3, shown in Fig. 3, adapted to engage one or more of the enclosures hereinafter generally designated as "boxes" 4.

In the illustrated embodiment, the bracket assembly is made of metallic plates and straps, typically of galvanised iron, and the following description refers to such a construction although it is by no way to be considered as limiting the materials to be used in carrying out the invention.

The illustrated base member 1 is formed from a metal plate or strap folded to an L shape so as to form two portions, 11 and 12 respectively, each provided with fastening means that in the illustrated embodiment comprises holes or more generally openings 13.

The openings in the portion 11 are for fixing the plate to the floor through screws and similar devices, while the openings in the portion 12 are for fixing the base member to the stud member, as will be illustrated later on. The openings 13 can be shaped like buttonholes both in portion 11 and in portion 12, as may be required.

The stud member 2 comprises at least one elongated metal profile or section 20 with side walls or shoulders 21 on both sides, defining a channel and increasing the stiffness of the member. The side walls 21 are formed by folding the edges of the section 20 and provide for some interruptions or cuts for allowing the passage of the tubes.

Holes or more generally openings 24 are formed in the shoulders 21 of the stud member 2, and in case also in the body of the stud member.

The length of the stud member can be different as required, and the stud member could comprise two or more portions slidably connected to one another and provided with suitable fastening means.

The members 3 for engaging the boxes are generally formed as L-shaped metal straps, with a short arm 15 provided with holes 18 (or with other suitable fastening means) for securing the members 3 to the shoulders 21 of the stud member 2, in this case by means of screws or rivets. On the long arm 17 there are provided means to engage and fasten the enclosures 4. In the illustrated embodiment, such means provides for two spaced apart holes 19, corresponding to holes provided on the bottom of the boxes 4, and the fastening is accomplished through rivets, screws and the like.

The straps 3 allow the horizontal positioning of the boxes by properly selecting the sizes of the long arm 17 and the holes used for connecting the boxes, while the height of the boxes is selected by choosing the proper holes 24 in the shoulders 21.

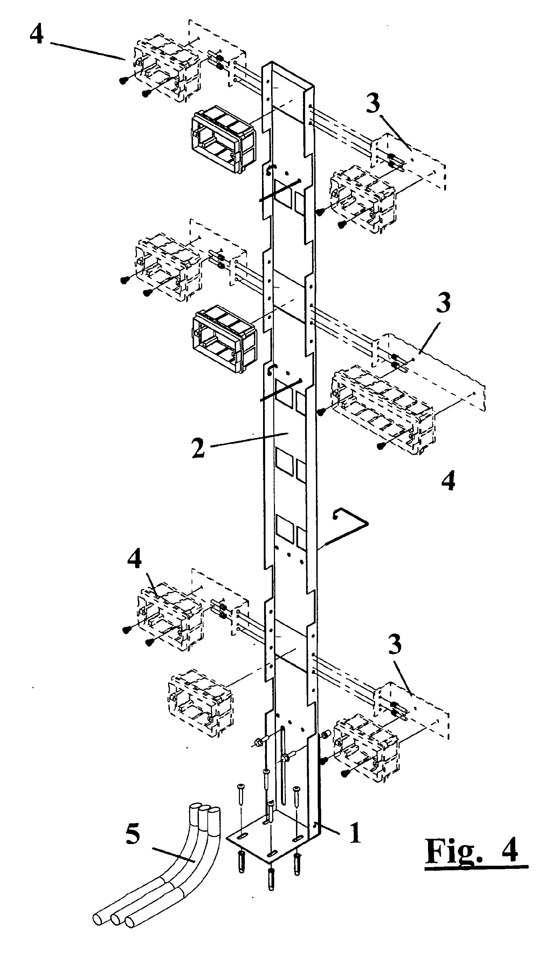

Fig. 4 illustrates an arrangement of the bracket assembly according to the invention providing for three boxes at a first level, two boxes at a second level and two boxes at a third level. The engaging members 3 at the intermediate position are longer than those at the remaining positions, and the members are secured to the stud through rivets, screws and the like.

In use, the bracket is assembled to the desired sizes and equipped with the desired boxes and tubes mounted thereon, is inserted into a chase formed in the wall, and the base member is secured to the floor through screws. The flexible tubes 5 containing the wiring are inserted at the base member and run within the channel in the stud member, secured by straps or other means (not shown).

In plasterboard walls the use of a bracket assembly according to the invention is particularly advantageous since this latter is fitted inside the bearing structure without waiting for the mounting of the plasterboard sheets.

Although the invention has been illustrated with reference to preferred embodiments, it is generally susceptible of other applications and modifications, such as for example a construction of the bracket as a one-piece member, that will become evident to the skilled of the art and fall within the scope of the invention as defined in the attached claims.

## Claims

1. A bracket assembly for mounting enclosures (4) for housing equipments of wiring installations into a building wall, **characterized in that** it comprises a base member (1) adapted to be fixed to the floor, a stud member (2) connected to said base member (1), and at least one member (3) adapted to engage at least one of the said enclosures (4) that can be fitted to said stud member (2) at predetermined positions.

2. A bracket assembly as claimed in claim 1, **characterized in that** said engagement members (3) are adapted to position said enclosures (4) sideways with respect to said stud member (2).

3. A bracket assembly as claimed in claim 1 or 2, **characterized in that** it is made of metal.

4. A bracket assembly as claimed in claim 3, **characterized in that** said base member (1) comprises an L-shaped plate forming two portions (11, 12) each provided with openings (13) for securing said plate to the floor and to said stud member (2) respectively.

5. A bracket assembly as claimed in the preceding claims, **characterized in that** said stud member (2) comprises at least an elongated section (20) with side walls or shoulders (21) defining a channel.

6. A bracket assembly as claimed in claim 5, **characterized in that** said stud member (2) comprises at least two sections slidably connected to each other.

7. A bracket assembly as claimed in the preceding claims, **characterized in that** holes or openings (24) are provided on said shoulders (21) of the stud member (2) for securing said engagement members (3) to the stud member, and means (19) are provided on said engagement members (3) to engage and fasten said enclosures (4) for housing the electric components.

8. A bracket assembly as claimed in claims 3 to 7, **characterized in that** said enclosures (4) are selected from the group formed by flush mounting boxes, junction boxes.

9. A bracket assembly as claimed in the preceding claims, **characterized in that** said engagement members (3) are formed as L-shaped metal straps, with a short arm (15) provided with means (18) for securing the engagement member (3) to the shoulders (21) of the stud member and a long side (17) provided with said means (19) for engaging and securing said enclosures (4).

10. A bracket assembly as claimed in the preceding claims, **characterized in that** said wiring installations include electric power systems for residential and industrial buildings, telephone networks, sound and intercom systems, and telecommunication networks.
